# EUROPÄISCHE PATENTANMELDUNG

(11) **EP 0 919 557 A1**
(43) Veröffentlichungstag der Anmeldung: **02.06.1999**
(21) Anmeldenummer: 98121888.6
(22) Anmeldetag: 18.11.1998
(51) Int. Cl.: C07F 5/06, C08F 4/602, C08F 10/00

(54) **Aluminiumalkylkomplexe als Cokatalysatoren**

(30) Priorität: 29.11.1997 DE 19753135
(71) Anmelder: MERCK PATENT GmbH, 64293 Darmstadt (DE)
(72) Erfinder: Poetsch, Eike Dr., 64367 Mühltal (DE); Auth, Eva Maria, 36041 Fulda (DE); Wassermann, Corinna Dr., 10627 Berlin (DE); Schutte, Stefan, 12349 Berlin (DE); Pohl, Ludwig Dr., 64295 Darmstadt (DE); Metzner, Thomas, 95463 Bindlach (DE); Frick, Michael, 14167 Berlin (DE); Dümichen, Ulf Dr., 06246 Milzau (DE); Weiss, Karin Prof. Dr., 95463 Bindlach (DE); Schuchmann, Herbert Prof. Dr., 12307 Berlin (DE); Heymer, Bernd, 14057 Berlin (DE); Hecht, Elmar Dr., 18311 Ribnitz-Damgarten (DE)

(57) **Zusammenfassung**

Die vorliegende Erfindung betrifft neue metallorganische Aluminiumverbindungen der allgemeinen Formel (I) 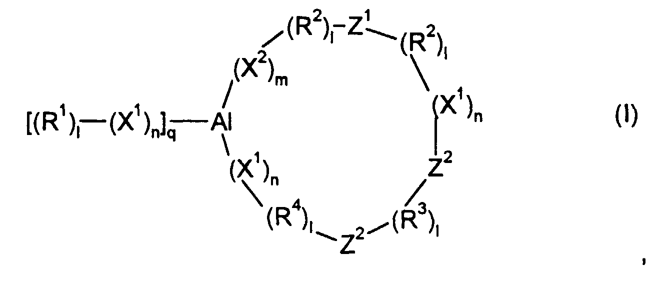 worin
- X¹: NH, NH₂*, NH-A*, N-A, N(A)₂*, O, OA*, OAryl*, S, SA*P, P(A)₂*, oder Einfachbindung
- X²: NH, N-A, O, S, PA oder X¹ komplex gebunden an Al(R¹)₃, oder Einfachbindung
- R¹: H; Hal, wenn n = 0; A, gegebenenfalls kovalent gebunden an Al; Si(A)₃, wenn X¹ = O,
- R²: A, gegebenenfalls kovalent gebunden an Al;
CH₂-CH=CH, CH₂-C≡C für Z¹ = H; 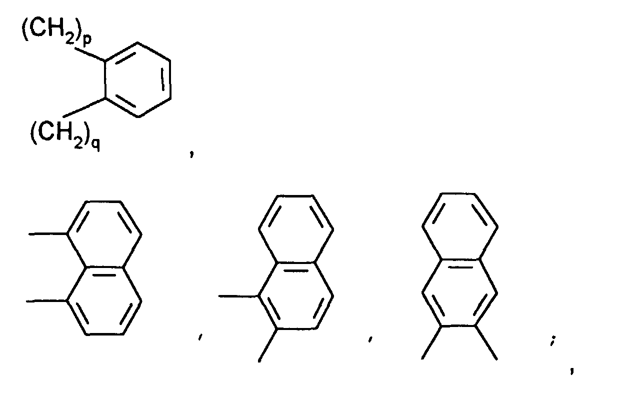
- R³ und R⁴: unabhängig voneinander Bindung oder gleich R² oder Si(A)₃ oder Si(A)₂
- Z¹: Bindung oder jeweils H gebunden an R²
- Z²: Bindung oder jeweils H gebunden an R² und R³
mit
- A: verzweigtes oder unverzweigtes C₁ - C₇-Alkyl, -Alkyliden oder -Alkenyliden
- Aryl: Phenyl, Naphtyl
- Hal: F, Cl,
unabhängig voneinander
- n: 0, 1,
- m: 0, 1,
- p: 0, 1,
- q: 1, 2
- l: 0, 1
bedeuten, worin zwischen X¹, X² und Al koordinative Bindungen bestehen können, R¹, R², R³, R⁴, X¹, X², Z¹, und Z² jeweils unabhängig voneinander an unterschiedlichen Positionen im Molekül alle Bedeutungen annehmen können und X¹ nur die mit "*" gekennzeichneten Bedeutungen annehmen kann, wenn l = 0 und R¹, R², R³ oder R⁴ entfallen,
welche als Cokatalysatoren in olefinischen Polymerisationsreaktionen dienen können. Insbesondere können diese Verbindungen mit verbesserten Eigenschaften zur Herstellung neuer Ziegler-Natta-Katalysatoren, bzw. von neuen Koordinations-Katalysatorsystemen eingesetzt werden, welche bereits bei niedrigen Temperaturen und einem Druck von etwa 10 bar hohe Aktivitäten aufweisen.

## Beschreibung

Die vorliegende Erfindung betrifft metallorganische Aluminiumverbindungen der allgemeinen Formel (I) 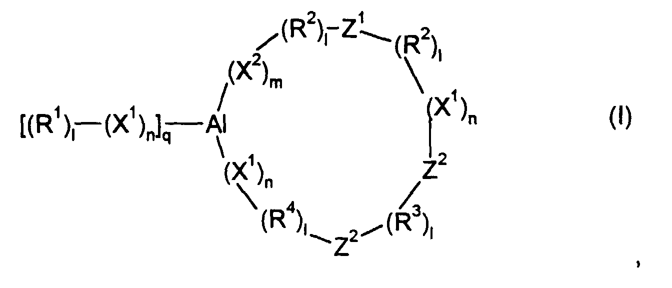 worin
- X¹: NH, NH₂*, NH-A*, N-A, N(A)₂*, O, OA*, OAryl*, S, SA*P, P(A)₂*, oder Einfachbindung
- X²: NH, N-A, O, S, PA oder X¹ komplex gebunden an Al(R¹)₃, oder Einfachbindung
- R¹: H; Hal, wenn n = 0; A, gegebenenfalls kovalent gebunden an Al; Si(A)₃, wenn X¹ = O,
- R²: A, gegebenenfalls kovalent gebunden an Al;
CH₂-CH=CH, CH₂-C≡C für Z¹ = H; 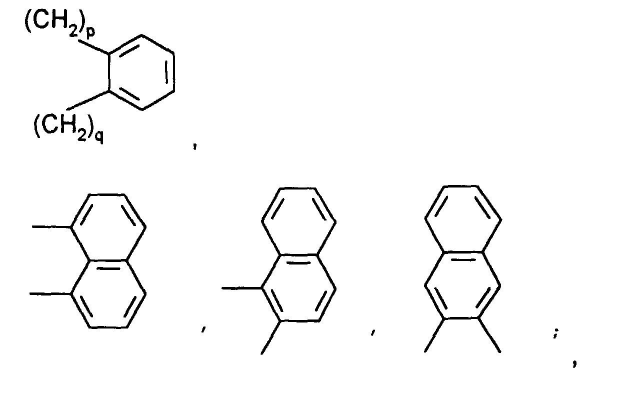
- R³ und R⁴: unabhängig voneinander Bindung oder gleich R² oder Si(A)₃ oder Si(A)₂
- Z¹: Bindung oder jeweils H gebunden an R²
- Z²: Bindung oder jeweils H gebunden an R² und R³
mit
- A: verzweigtes oder unverzweigtes C₁ - C₇-Alkyl, -Alkyliden oder -Alkenyliden
- Aryl: Phenyl, Naphtyl
- Hal: F, Cl,
unabhängig voneinander
- n: 0, 1,
- m: 0, 1,
- p: 0, 1,
- q: 1, 2
- l: 0, 1
bedeuten, worin zwischen X¹, X² und Al koordinative Bindungen bestehen können, R¹, R², R³, R⁴, X¹, X², Z¹, und Z² jeweils unabhängig voneinander an unterschiedlichen Positionen im Molekül alle Bedeutungen annehmen können und X¹ nur die mit "*" gekennzeichneten Bedeutungen annehmen kann, wenn l = 0 und R¹, R², R³ oder R⁴ entfallen,
welche als Cokatalysatoren in olefinischen Polymerisationsreaktionen dienen können. Insbesondere können diese Verbindungen mit verbesserten Eigenschaften zur Herstellung neuer Ziegler-Natta-Katalysatoren, bzw. von neuen Koordinations-Katalysatorsystemen eingesetzt werden, welche bereits bei niedrigen Temperaturen und einem Druck von etwa 10 bar hohe Aktivitäten aufweisen.

Gängige Koordinations-Katalysatorsysteme stellen außerordentlich vielseitige Katalysatoren dar, die in chemischen Reaktionen von und mit olefinisch ungesättigten Verbindungen eingesetzt werden. Es sind dies insbesondere Verfahren zur Herstellung von Olefin-Polymeren durch Koordinationspolymerisation und die Metathese von Alkenen oder Alkinen. Von wesentlicher technischer Bedeutung ist die Herstellung verschiedener Polyethylene für unterschiedliche Anwendungen, so z.B. Polyethylen erhöhter Dichte (high density Polyethylene, HDPE) oder Polyethylen mit besonders niedriger Dichte (low density polyethylene, LLDPE) sowie von Polymeren und Copolymeren von Ethylen, Propylen oder anderen 1-Alkenen und Alkinen. Durch katalysierte Metathese können aus unsymmetrischen Alkenen bzw. Alkinen höhere ungesättigte Kohlenwasserstoffverbindungen gezielt hergestellt werden und aus ungesättigten zyklischen Kohlenwasserstoffverbindungen langkettige ungesättigte Kohlenwasserstoffe erhalten werden. Letztere finden beispielsweise Anwendung bei der Herstellung von Elastomeren. Darüberhinaus finden Koordinationskatalysatoren in weiteren Reaktionen Anwendung, wie etwa bei der Alkenhydrierung oder in metallorganischen Synthesen.

Gemäß den bisherigen wissenschaftlichen Erkenntnissen zum Wirkungsmechanismus von Koordinationskatalysatoren wird davon ausgegangen, daß jeweils eine Übergangsmetallverbindung das katalytisch aktive Zentrum bildet, an das die olefinisch ungesättigte Verbindung in einem ersten Schritt koordinativ anbindet. Die Olefinpolymerisation erfolgt über eine Koordination der Monomeren und eine nachfolgende Insertionsreaktion in eine Übergangsmetall-Kohlenstoff- oder eine Übergangsmetall-Wasserstoff-Bindung. Die Anwesenheit von metallorganischen Verbindungen in den Koordinations-Katalysatorsystemen bzw. während der katalysierten Reaktion ist erforderlich, um den Katalysator durch Reduktion und gegebenenfalls Alkylierung oder Bildung eines komplexen Systems (Kation/Anion) zu aktivieren bzw. seine Aktivität aufrechtzuerhalten. Diese Verbindungen werden daher auch als Cokatalysatoren bezeichnet. Die das katalytisch aktive Übergangsmetallatom enthaltende Verbindung wird als Primär- oder Präkatalysator bezeichnet.

In den letzten Jahren hat die koordinative Polymerisation mit komplexen Initiatorsystemen große technische Bedeutung erlangt, besonders für die Polymerisation von Ethylen bei niedrigen Drücken. Allein in den USA wurden 1995 über 8·10⁹ Tonnen PE produziert. (S.W.Bigger, Eur. Polym. J.Vol. 32, No.4, pp487, 1996)

Die technisch wichtigsten Katalysatoren in diesem Bereich sind die sogenannten Ziegler-Natta-Katalysatoren. Als solche bezeichnet man Systeme die aus einer Kombination von Verbindungen von Metallen der IV.-VII. Nebengruppe des Periodensystems der Elemente mit z.B., Alkyl-, Arylverbindungen oder Hydriden der Elemente der Hauptgruppen I-III bestehen. Typische Ziegler-Katalysatoren entstehen z.B. bei der Reaktion von TiCl₄ mit Et₃Al; TiCl₃ mit AlEt₂CL. Bei diesen Systemen handelt es sich um heterogene Kataysatoren; sie fallen als feine Suspension in einem organischen Lösungsmittel (z.B. Heptan) an.

Die wichtigsten bevorzugt verwendeten Aluminiumalkyle sind AlEt₃, Al-i-Bu₃, AlEt₂Cl, AlEtCl₂, AlEtCl₂ und AlEt₂OR, allesamt sehr luftsauerstoff und -feuchtigkeitsempfindlich und daher schwer zu handhaben. Anstelle der Titanchloride sind besonders Verbindungen des Vanadiums und Chrom von Interesse, in speziellen Anwendungen auch Molybdän, Kobalt, Rhodium und Nickel. An Stelle der Aluminiumalkyle sind zahlreiche andere metallorganische Verbindungen besonders Natrium, Lithium und Cadmium in der Kombination mit Titanverbindungen als wirksam beschrieben. (H.J. Sinn et al., Poymerisation und Insertionsaktivität von Aluminiumtrialkylen und Ziegler-Natta Katalysatoren, Angew. Chem. 72 (1960) 522)

Technisch bedeutende Lösungs-Polymerisations-Verfahren zur Darstellung von HDPE sind Beispielsweise das Dow-Verfahren.

Hierbei wird eine Mischung aus TiClₓ und AlR₃ in Kohlenwasserstoffen (C₈-C₉) bei einem Druck p> 10 bar und einer Reaktionstemperatur T>180°C hergestellt. Die Aktivität im kontinuierlichen Prozeß (140°C, 30 bar; TiCl₄:AlR₃ = 1:5) beträgt 6.323 gPE/h. (Dow, US. 3491073, 1970)

In einem Verfahren der Firma Du Pont werden Ti-/V-Halogenide mit AlR₃ in Cyclohexan bei Drücken von 200 bar und einer Temperatur von 180-270 °C produziert. Die Aktivität betragt 20-50 kg PE/g Metall Stunde; Die viskosimetrisch ermittelte Molmasse liegt bei Mη = 1,8· 10⁵ g/mol. (Du Pont, US 2862917, 1958; J.P. Forsman, Hydrocarbon Processing, 51(11), 130(1972)

Technisch wichtige Suspensions-Polymerisations-Verfahren zur Darstellung von HDPE sind z.B. das Mitsubishi-Verfahren. Hierbei wird mit einem Titankatalysator in n-Hexan bei 5-10 bar und 30 - 90°C im Rührkessel HDPE erzeugt. (A. Kageyama, Hydrocarbon Processing 51(7), 115(1972), oder das Montedison-Verfahren. Zur Durchführung des Montedison-Verfahrens verwendet man Titankatalysatoren in Benzin bei 1-15 bar und 50 - 100 °C im Rührkessel. Die Aktivität beträgt 200 kgPE/gTi. (A. Heath, Chemical Engineering (Apr. 3) 66(1972)

Ein weiterer wichtiger Anbieter von HDPE ist die Firma Hoechst. Ein heterogener Katalysator (Titan/Träger) wird mit Aluminiumtrialkylen in Hexan bei 8 - 10 bar und 80 - 90 °C im Rührkessel zur Produktion von Polyethylen verwendet. (Kreuter, Chemical Engineering (Aug.5)62 (1972)

Nachdem in der Anfangsphase vor allem diese Heterogenität für die katalytische Aktivität ("katalytische Oberfläche") verantwortlich gemacht wurde, konnten in der Folgezeit auch lösliche (homogene) Systeme gefunden werden, die annähernd gleich wirksam waren.

So entsteht z. B. aus der Kombination von Bis(cyclopentadienyl)titandichlorid (cp₂TiCl₂) oder Vanadylchlorid (VOCl₃) und Diethylaluminiumchlorid (Et₂AlCl) oder Alumoxan ([-OAl(CH₃)-]ₙ) ein homogener Ziegler-Katalysator. Ein weiteres wichtiges homogenes Katalysatorsystem ist: cp₂ZrMe₂/Alumoxan (homogen).

MgCl₂ gebundene TiCl₄ Katalysatorsysteme wurden 1970 entdeckt und werden Katalysatorsysteme der zweiten Generation gennant. Ein Beipiel für dieses heterogene System ist: MgCl₂/AlR₃/TiCl₄. Die Katalysatoraktivität betragt 200 kg PE/ g Ti h. (A.D. Jenkins, A. Ledwith; Reaktivity, Mechanism and Structure in Polymer Chemistry)

Alle diese bekannten Katalysatorsyteme bergen die Nachteile in sich, daß sie erst bei erhöhter Temperatur und einem Druck oberhalb von 10 bar einsetzbar sind, wobei trotzdem nicht in allen Fällen eine zufriedenstellende Katalysatoraktivität erzielt wird.

Die praktische Anwendung dieser Katalysatoren und verwandter Typen in den in großer Vielfalt entwickelten Verfahrensvarianten kann Produkte mit zum Teil höchst unterschiedlichen Eigenschaften liefern. Bei Olefin-Polymeren, die als Werkstoffe von allgemein bekannter Bedeutung sind, richten sich Einsetzbarkeit und Einsatzbereich eigenschaftsbedingt zum einen nach der Art der zugrundeliegenden Monomere bzw. nach Auswahl und Verhältnis der Comonomere und den, das Polymer charakterisierenden typischen physikalischen Parametern, wie mittlere Molmasse, Molmassenverteilung, Verzweigungsgrad, Vernetzungsgrad, Kristallinität, dichte, Anwesenheit funktioneller Gruppen im Polymer usw., zum anderen nach verfahrenstechnisch bedingten Eigenschaften, wie Gehalt an niedermolekularen Verunreinigungen, Anwesenheit von Katalysatorresten und letztendlich nach den Kosten.

Zur Beurteilung der Leistungsfähigkeit eines Koordinations-Katalysatorsystems sind neben der Verwirklichung der gewünschten Produkteigenschaften weitere Faktoren entscheidend, wie die Aktivität des Katalysatorsystems, also die für eine wirtschaftliche Umsetzung einer vorgegebenen Menge Olefin erforderliche Menge an Katalysator, der Produktumsatz pro Zeiteinheit und die Produktausbeute, der Verlust an Katalysator sowie die Wiederverwendbarkeit des Katalysators. Es werden daher Katalysatorsysteme mit einer möglichst hohen Produktivität aber auch mit hoher Spezifität zugunsten eines geringen Verzweigungsgrades und einer hohen Stereoregularität des Polymers gesucht.

Wesentlich ist aber auch die Frage der Stabilität und der Handhabbarkeit des Katalysators bzw. seiner Komponenten. Praktisch alle bekannten Koordinations-Katalysatoren sind äußerst luft- und feuchtigkeitsempfindlich. Durch Zutritt von (Luft-)Sauerstoff und/oder Wasser werden die Koordinations-Katalysatoren in ihrer Aktivität vermindert oder irreversibel zerstört. Die Koordinations-Katalysatoren müssen daher bei Herstellung, Lagerung und Einsatz strikt vor Luft- und Feuchtigkeitszutritt bewahrt werden, was naturgemäß die Handhabung erschwert und den erforderlichen Aufwand erhöht.

Übliche Katalysatorsysteme sind auch empfindlich gegenüber Stoffen, die elektronenreiche Elemente, wie etwa Sauerstoff oder Stickstoff im Molekül enthalten. Verbindungen wie Alkohole und Amine oder auch polare Monomere, die als Comonomere oder Additive für das Polymer von Interesse sein können, desaktivieren den Katalysator.

Noch empfindlicher in dieser Hinsicht und daher noch schwieriger handhabbar sind die als Aktivatoren bzw. Cokatalysatoren einzusetzenden metallorganischen Verbindungen, wie insbesondere die überwiegend hierfür verwendeten Aluminiumalkylverbindungen. Gerade diese stellen aufgrund ihrer extremen Empfindlichkeit und Selbstentzündlichkeit in der Praxis ein ernstes Problem dar.

Die Aufgabe der vorliegenden Erfindung besteht daher darin, weniger empfindliche metallorganische Aluminiumverbindungen aufzufinden, die sich aber trotzdem als aktivierende Komponenten in Co-Katalysatorsystemen eignen und in ihrer Verwendung in diesen Katalysatorsystemen mindestens gleiche, insbesondere jedoch verbesserte Anwendungseigenschaften aufweisen. Weiterhin sollten diese Verbindungen eine geringere Empfindlichkeit aufweisen und damit eine problemlosere Handhabbarkeit aufweisen.

Die Lösung der Aufgabe erfolgt durch neue Verbindungen gemäß Anspruch 1 der allgemeinen Formel (I) 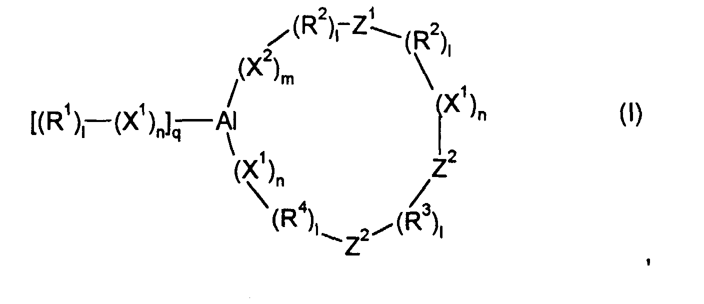 worin
- X¹: NH, NH₂*, NH-A*, N-A, N(A)₂*, O, OA*, OAryl*, S, SA*P, P(A)₂*, oder Einfachbindung
- X²: NH, N-A, O, S, PA oder X¹ komplex gebunden an Al(R¹)₃, oder Einfachbindung
- R¹: H; Hal, wenn n = 0; A, gegebenenfalls kovalent gebunden an Al; Si(A)₃, wenn X¹ = O,
- R²: A, gegebenenfalls kovalent gebunden an Al;
CH₂CH=CH, CH₂-C≡C für Z¹ = H; 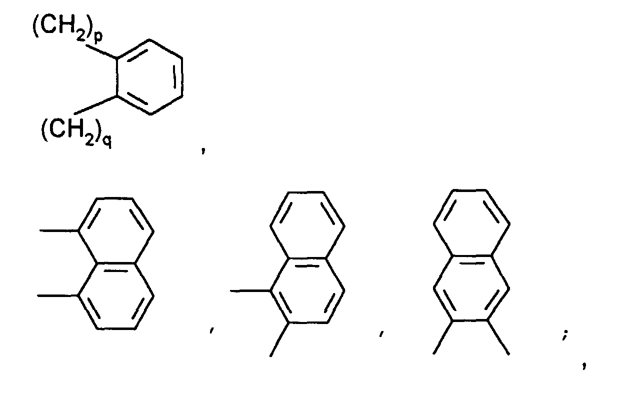
- R³ und R⁴: unabhängig voneinander Bindung oder gleich R² oder Si(A)₃ oder Si(A)₂
- Z¹: Bindung oder jeweils H gebunden an R²
- Z²: Bindung oder jeweils H gebunden an R² und R³
mit
- A: verzweigtes oder unverzweigtes C₁ - C₇-Alkyl, -Alkyliden oder -Alkenyliden
- Aryl: Phenyl, Naphtyl
- Hal: F, Cl,
unabhängig voneinander
- n: 0, 1,
- m: 0, 1,
- p: 0, 1,
- q: 1, 2
- l: 0, 1
bedeuten, worin zwischen X¹, X² und Al koordinative Bindungen bestehen können, R¹, R², R³, R⁴, X¹, X², Z¹, und Z² jeweils unabhängig voneinander an unterschiedlichen Positionen im Molekül alle Bedeutungen annehmen können und X¹ nur die mit "*" gekennzeichneten Bedeutungen annehmen kann, wenn l = 0 und R¹, R², R³ oder R⁴ entfallen.

Es wurde gefunden, daß sich intramolekular stabilisierte metallorganische Aluminiumverbindungen der Formel (I), vorzüglich als Komponenten in Koordinations-Katalysatorsystemen eignen.

Gegenstand der vorliegenden Erfindung ist daher die Verwendung intramolekular stabilisierte metallorganische Aluminiumverbindungen der Formel (I), als Komponenten in Koordinations-Katalysatorsystemen sowie Koordinations-Katalysatorsysteme, welche Verbindungen der allgemeinen Formel (I) enthalten.

Gegenstand der Erfindung ist insbesondere auch die Verwendung der Verbindungen gemäß Formel (I) als Komponenten in Ziegler-Natta-Katalysatoren.

Koordinations-Katalysatorsysteme, welche Verbindungen der allgemeinen Formel (I) enthalten, liegen erfindungsgemäß als Kombination mit Übergangsmetallverbindungen der IV bis VIII. Nebengruppe des Periodensystems der Elemente vor.

Erfindungsgemäße Kombinationen der Koordinations-Katalysatorsysteme, welche Verbindungen der allgemeinen Formel (I) enthalten, mit Übergangsmetallverbindungen sind insbesondere solche in denen Verbindungen aus der Gruppe TiCl₄ und VCl₄ enthalten sind.

Gegenstand der Erfindung sind auch Verfahren zur Herstellung von Polymeren durch Polymerisation, in denen die vorgenannten Koordinationskatalysatorsysteme verwendet werden. Insbesondere sind dieses Verfahren zur Herstellung von Polyethylen, vorzugsweise Verfahren zur Herstllung von hochmolekularem Polyethylen.

Erfindungsgemäße Verbindungen der Formel (I) können eine cyclische Struktur aufweisen, worin Aluminium als ein Element der Gruppe IIIa des Periodensystems der Elemente in jedem Fall ein Glied des Ringsystems darstellt. Es kann sich dabei aber auch um Verbindungen handeln, bei denen die verschiedenen organischen Reste unabhängig voneinander kovalent oder koordinativ an das Aluminiumatom gebunden sind.
In Verbindungen der Formel (I), welche keine cyclische Stuktur aufweisen, stellt Aluminium jeweils das Zentralatom der metallorganischen Verbindungen dar.
Sowohl in cyclischen als auch nicht cyclischen Verbindungen der Formel (I) können zum Aluminium direkt benachbarte Atome Kohlenstoff-, Stickstoff-, Sauerstoff-, Schwefel- oder Phosphoratome sein. Von diesen zum Aluminum benachbarten Atomen kann mindestens eines koordinativ an Aluminium gebunden sein. Solche benachbarten Atome können durch eine oder zwei Alkyl-, Alkenyl oder Aryl-Gruppen substituiert sein. Bei unterschiedlicher Substitution und zusätzlicher Koordination über O, N, S oder P-Atome wird das zentrale Aluminium-Atom zu einem Chiralitätszentrum. Über das chirale Zentrum sind stereokontrollierte Polymerisationen und Copolymerisationen beispielsweise des Propylens möglich.

Alkenyl-, bzw. Alkylsubstituenten können geradkettig oder verzweigt mit 1 - 7 C-Atomen sein Sie können auch Teil eines cyclischen Rings sein. Vorzugsweise handelt es sich um Alkenyl- und Alkylgruppen mit 1 - 6 C-Atomen aus der Gruppe Methyl, Ethyl, n- und i-Propyl, 2-Propenyl, 2-Propinyl, n-, 2- und t-Butyl, 2-, 3-Butenyl-, 1,3-Butadienyl-, n-, 2-, 3-Pentyl, 2,2-Dimethylpropyl, 2-Methylbutyl, 3-Methylbutyl, 2-, 3- und 4-Pentenyl, 1,3-, 1,4-, 2,4-Pentadienyl, n-, 2-, 3-Hexyl, 2-, 3-Methylpentyl, 2,2-, 3,3-Dimethylbutyl und 2-Ethylbutyl-, insbesondere bevorzugt sind unverzweigte Alkyl- und Alkenylgruppen. Entsprechende Alkylgruppen sind in Formel (I) durch das Symbol A wiedergegeben. Im Fall von cyclischen Verbindungen sind solche mit 5- und 6-gliedrigen Ringsystemen, in denen Aluminium in den Ring integriet ist, bevorzugt.

Als Arylsubstituenten kommen sowohl Phenyl als auch Naphthyl in Frage. Vorzugsweise sind Arylsubstituenten Teil des cyclischen Rings. Sie können direkt oder über Alkylspacer an Heteroatome, wie N, O, S, oder P gebunden sein, die zum Aluminium eine kovalente oder koordinative Bindung ausbilden. Sie können aber auch direkt an das Aluminiumatom gebunden sein.

An nicht cyclische, zum Aluminium benachbarte Atome können auch Wasserstoff, Halogenatome oder Trialkylsiliziumreste gebunden sein. Als Halogenatome kommen hier Fluor und Chlor in Frage.
Vorzugsweise handelt es sich um Chlor. Insbesondere bevorzugt handelt es sich hier um Wasserstoffatome. Geeignete Aluminiumverbindungen sind auch solche, in denen ein Halogenatom, vorzugsweise ein Chloratom, an Aluminium gebunden ist. Als weiterer nicht-cyclischer Substituent kann in diesem Fall ein Alkylrest, vorzugsweise mit 1 - 4 C-Atomen an das Aluminiumatom gebunden sein. Erfindungsgemäß sind in Verbindungen mit Trialkylsiliziumresten diese über ein Sauerstoffatom an Aluminium gebunden.
Gute Koordinations-Katalysatoreigenschaften werden durch die Verwendung von Verbindungen der Formel (I) erzielt, in denen n in einem Fall die Bedeutung 0 annimmt und Z², R³ und R⁴ eine Bindung bedeuten, R² eine ungesättigte Gruppe ausgewählt aus CH₂-CH=CH und CH₂-C≡C
darstellt und Z¹ jeweils H gebunden an R² ist.

Besonders gute Koordinations-Katalysatoreigenschaften weisen solche Systeme auf, in denen ein aromatischer Ring, wie Phenyl oder Naphtyl in den Aluminium-haltigen cyclischen Ring der Verbindungen gemäß Formel (I) integriert ist, und zwar sowohl über zum Ring gehörende Heteroatome als auch über Alkylgruppen, welche zwischen dem Aluminiumatom und dem aromatischen Ring als Spacer dienen.

Erfindungsgemäße Verbindungen sind auch solche, in denen mindestens eine koordinative Bindung zu einer weiteren Aluminiumorganischen Verbindung vorliegt. Bei dieser weiteren Aluminiumorganischen Verbindung kann es sich um eine einfache Trialkylaluminiumverbindung oder um eine identische Verbindung handeln.

Geeignete Verbindungen der Formel (I) besitzen vier Substituenten an einem zentralen Aluminiumatom, wovon mit großer Wahrscheinlichkeit mindestestens einer koordinativ gebunden ist und zur Stabilisierung der Verbindung beiträgt.

Erfindungsgemäße Verbindungen lassen sich nach dem Fachmann bekannten Methoden zur Herstellung von Metallorganischen Verbindungen herstellen. Verfahren zur Herstellung solcher Verbindungen sind beispielsweise in G. Bähr, P. Burba, Methoden der organischen Chemie, Bd. XIII/4, Georg Thieme Verlag, Stuttgart (1970) beschrieben. Und zwar lassen sich diese Verbindungen unter den Reaktionsbedingungen, die für die genannten Umsetzungen bekannt und geeignet sind herstellen. Dabei kann aber auch von an sich bekannten, hier nicht näher beschriebenen Varianten Gebrauch gemacht werden. Nähere Details zur Synthese können den Offenlegungsschriften DE 38 17 090 A1 und DE 37 26 485 A1 oder aus Chem. Ber. 124, 1113 - 1119, (1971) entnommen werden.

Überraschenderweise wurde gefunden, daß die erfindungsgemäßen Verbindungen gegenüber Sauerstoff, insbesondere der Luft, und Feuchtigkeit recht stabil sind. Dieses trifft auch auf mit Hilfe dieser Verbindungen hergestellte Koordenations-Katalysatoren zu. Weiterhin weisen entsprechende Koordenations-Katalysatorsysteme unter Reaktionsbedingungen eine besonders hohe Beständigkeit auf. Sie neigen wesentlich weniger zur Desaktivierung gegenüber Verbindungen mit feien Elektronenpaaren, insbesondere solchen Verbindungen, die Heteroatome wie Schwefel, Sauerstoff oder Stickstoff enthalten. Ganz besonders vorteilhafte Eigenschaften weisen diese Katalysatorsysteme in Polymerisationsreaktionen, insbesondere Olefinpolymerisationsreaktionen auf.

So wurde gefunden, daß die Verwendung erfindungsgemäßer Verbindungen in Koordinations-Katalysatorsystemen, in denen Übergangsmetallverbindungen der 4. und 8. Nebengruppe, insbesondere Verbindungen des Titans und des Vanadiums verwendet werden, zu besonders guten Polymerisierungsergebnissen führen. Und zwar werden einerseits Katalysatorsysteme mit besonders hoher Aktivität erhalten und andererseits Polymerisierungsprodukte mit hohen Molekulargewichten und gleichzeitig einheitlicher Struktur. Besonders vorteilhafte Eigenschaften bieten hier die erfindungsgemäßen Verbindungen, die ein oder zwei Heteroatome enthalten. Es werden beispielsweise in der Polymerisation von Polyethylen hochmolekulare Produkte mit Molekulargewichten von Mₙ > 10⁶ erzielt. Ganz besonders gute Ergebnisse werden mit entsprechenden VCl₄-Katalysatorsystemen erzielt. Besonders gute Ergebnisse werden durch solche Systeme erzielt, in denen VCl₄ durch cyclische Aluminiumalkyle aktiviert wird, bei denen sich im cyclischen Ring ein Stickstoff- oder Sauerstoffatom in Nachbarschaft zum Aluminiumatom befindet und gegebenenfalls ein aromatischer Ring Teil des mit Aluminium gebildeten Rings ist. Herausragend ist die Aktivitätssteigerung durch die in Tabelle 1 mit AlO2 und AlN10 bezeichneten Verbindungen, die sowohl in Gegenwart von TiCl₄ als auch mit VCl₄ hochmolekulare Produkte mit hohen Ausbeuten liefern.

Mit allen Katalysatorsystemen wurde sehr hochmolekulares Polyethylen erhalten. Dieses bedeutet, daß während der Polymerisation Abbruchreaktionen der Polymerketten vom katalytischen Zentrum gering sind.

Insgesamt weisen die erfindungsgemäßen Koordinations-Katalysatorsysteme bei der Olefinpolymerisation eine besonders hohe Spezifität auf, und es werden produkte mit hohen Molmassen und engen Molmassenverteilungen erhalten. Zwar ist dieses auch von der Reaktionsführung und den eingesetzten Reaktanden abhängig, jedoch gehört es zu den Standardmethoden eines Fachmanns, je nach Bedarf, die Reaktionsbedingungen zu optimieren.

Der erfindungsgemäße Einsatz der Verbindungen der Formel (I) als aktivierende Komponenten in Koordinations-Katalysatorsystemen erfolgt völlig analog und im Ersatz zu den bisher üblichen Metallorganylen, insbesondere der wenig stabilen und gefährlichen Aluminiumalkyle.

Durch die hohe Aktivität der Katalysatorsysteme kann mit einer eingesetzten Katalysatormenge mehr Produkt gebildet werden, bzw die Katalysatormenge kann wesentlich reduziert werden. Letzteres hat zur Folge, daß weniger Katalysator vom Produkt abgetrennt werden muß, daß aber auch wesentlich weniger Katalysator im Produkt verbleibt. Außerdem können die Kosten aufgrund eines geringeren Katalysatorverbrauchs gesenkt werden. Zwar werden die Kosten durch eine Reihe weiterer Faktoren, wie qualitative und quantitative Zusammensetzung der Katalysatorsysteme, eingesetzte Monomere, Reaktionsbedingungen und Fahrweise bei der Polymerisation beeinflußt, jedoch kann der verwendete Katalysator dabei eine nicht unerhebliche Rolle spielen und zwar allein schon durch erforderliche Schutzmaßnahmen zum Erhalt der Aktivität. Aufgrund der Vielfältigkeit der erfindungsgemäßen Aluminiumorganischen Verbindungen kann der Fachmann ohne weiteres mit Hilfe von Routineversuchen das für seine Zwecke geeignetste Katalysatorsystem ermitteln und optimieren.

Wie oben schon gesagt, handelt es sich bei den erfindungsgemäßen Verbindungen der Formel (I) um relativ stabile Verbindungen, mit deren Hilfe vorteilhafter Weise ebenfalls stabile Koordinations-Katalysatorsysteme erhalten werden, wodurch deren Herstellung, Lagerung und Gebrauch sich wesentlich unproblematischer gestaltet als bei bislang bekannten Systemen.

Die Herstellung und Anwendung der Katalysatoren erfolgt in an sich bekannter Weise wie sie für das jeweilige System und den jeweiligen Einsatz üblich ist. In der Regel wird bei der Olefin-Polymerisation und bei der Metathes mit heterogener Katalyse in GAs- oder Flüssigphase gearbeitet. Falls notwendig, wird zunächst aus der katalytischen Übergangsmetallverbindung und einem Trägermaterial der trägergebundene Präkatalysator hergestellt, dieser erforderlichenfalls in üblicher Weise aktiviert bzw. voraktiviert und dann gegebenenfalls in einem Lösungsmittel, z. B in einem Kohlenwasserstoff wie Pentan, Hexan oder Toluol, suspendiert. Die Zugabe des Cokatalysators erfolgt wie sonst auch üblich unmittelbar vor der Umsetzung der Monomere oder "in situ" in Anwesenheit derselben. Die Steuerung der Reaktion sowie die Gewinnung und Aufarbeitung der Reaktionsprodukte erfolgt ebenfalls in völlig analoger Weise.

Wie schon früher erwähnt sind aufgrund der erhöhten Stabilität der Aluminiumorganylverbindungen und der erheblich verringerten Empfindlichkeit der erhaltenen Katalysatorverbindungen alle Verfahrensschritte wesentlich problemloser und unter wesentlich weniger strikten Schutz- und Sicherheitsmaßnahmen durchführbar.

Durch die vorliegende Erfindung werden daher neue Katalysatorsysteme mit vorteilhaften Eigenschaften zugägnglich gemacht, die darüber hinaus auf die jeweiligen Anwendungsbedürfnisse hin maßgeschneidert werden können.

Die im folgenden gegebenen Beispiele sollen den Gegenstand der vorliegenden Erfindung näher verdeutlichen. Sie sind aber nicht dazu geeignet der den Gegenstand der Erfindung auf die gegebenen Beispiele zu beschränken, die aufgrund der gegebenen Informationen dem Fachmann die allgemeinere Gültigkeit des beschriebenen Gegenstands der Erfindung offenbart wird.

### Beispiele

### Beispiel 1

Ein Autoklav wird für eine Stunde auf ein Hochvakuum von 5 x 10⁻³ evakuiert, anschließend mit Argon begast und auf die Reaktionstemperatur von 30°C thermostatisiert. Es werden 480 ml Heptan als Lösungsmittel eingefüllt und etwa 15 Minuten thermostatisiert, bis die Solltemperatur im Autoklaven konstant ist.

Gleichzeitig wird in einem Schwenkkolben die Katalysatorlösung hergestellt. Der Cokatalysator AlOO₄ (die chemische Struktur dieses Cokatalysators kann aus der Tabelle entnommen werden)wird im fünffachen Überschuß 403 mg (194,21 g/mol) bezogen auf VCl₄ in 20 ml Lösungsmittel vorgelegt. Unter heftigem Rühren werden dann 80 mg VCl₄ gelöst in Hexan (0,5 ml einer 0,83 molaren Lösung VCl4 in Hexan) zugetropft, wobei sofort ein braun-schwarzer Niederschlag ausfällt. Nach 10 minütigem Rühren wird diese Mischung in den thermostatisierten Autoklaven gegeben.

Die Katalysatorlösung wird mit dem Lösungsmittel im Autoklaven noch 50 Sekunden bei einer Rührergeschwindigkeit von 700 Umdrehungen pro Minute miteinander verrührt, bevor das Ethylen mit einem Druck von 10 bar durch ein Druckventil in den Autoklaven gepreßt wird.

Die Reaktion wird nach einer Stunde beendet, indem der Überdruck abgelassen und Luftzutritt ermöglicht wird.

Das Lösungsmittel wird vom gebildeten Polyethylen abdekantiert und das zurückbleibende Produkt mit Methanol nachgewaschen. Die abdekantierte Restlösung wird gaschromatographisch auf niedermolekulare Bestandteile untersucht.

Das erhaltene Produkt ist ein feinpulveriges, weißes Polyethylen.

Die Reaktion ist auch mit Toluol als Lösungsmittel durchführbar.

### Versuchsergebnisse:

| Katalysator | Polyethylenausbeute | Katalysatoraktivität |
|---|---|---|
| AlOO₄ | 110 g | 8,7 kg PE/g V h |

| Vergleich: | | |
|---|---|---|
| AlO₂ in Heptan | 90 g | 7,0 kg PE/g V h |

Weitere Versuchsergebnisse die unter gleichen oder ähnlichen Bedingungen durchgeführt wurden, sind in Tabelle 1 zusammengefaßt. Diese Tabelle enthält auch Versuche, welche in Gegenwart eines erfindungsgemäßen Aluminium-cokatalysators und TiCl₄ als Katalysator durchgeführt worden sind.

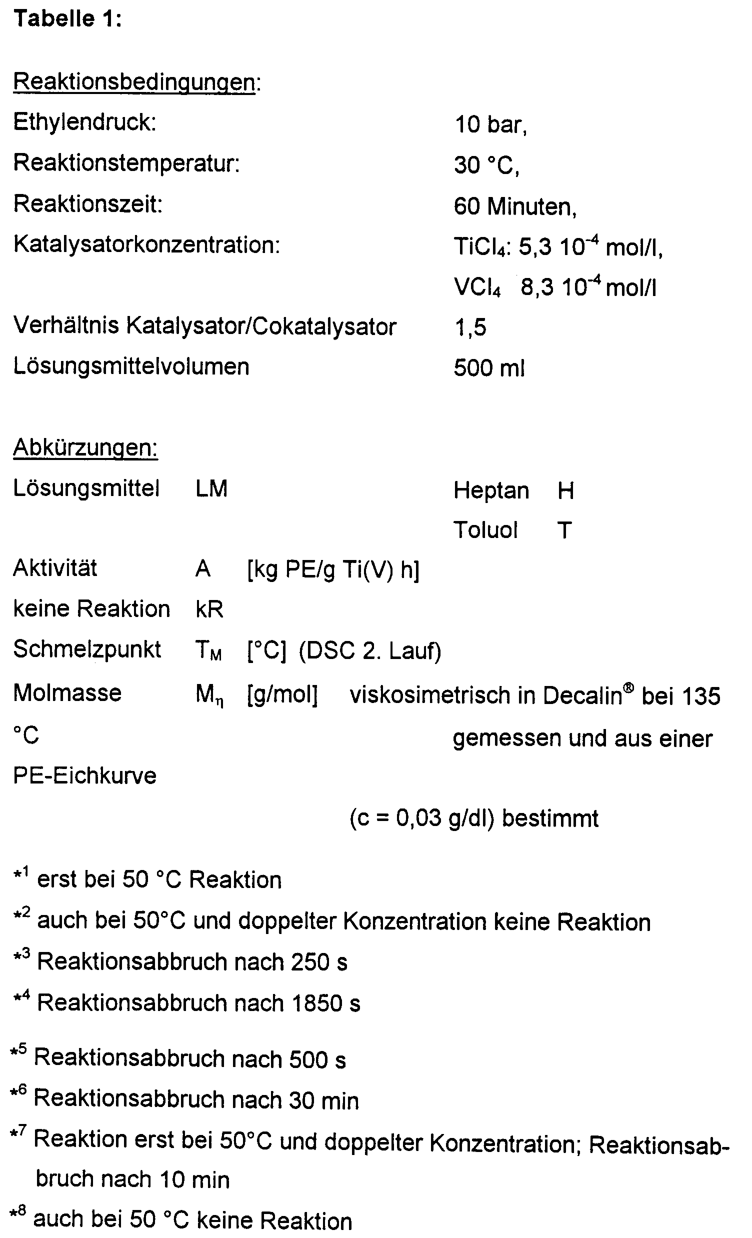

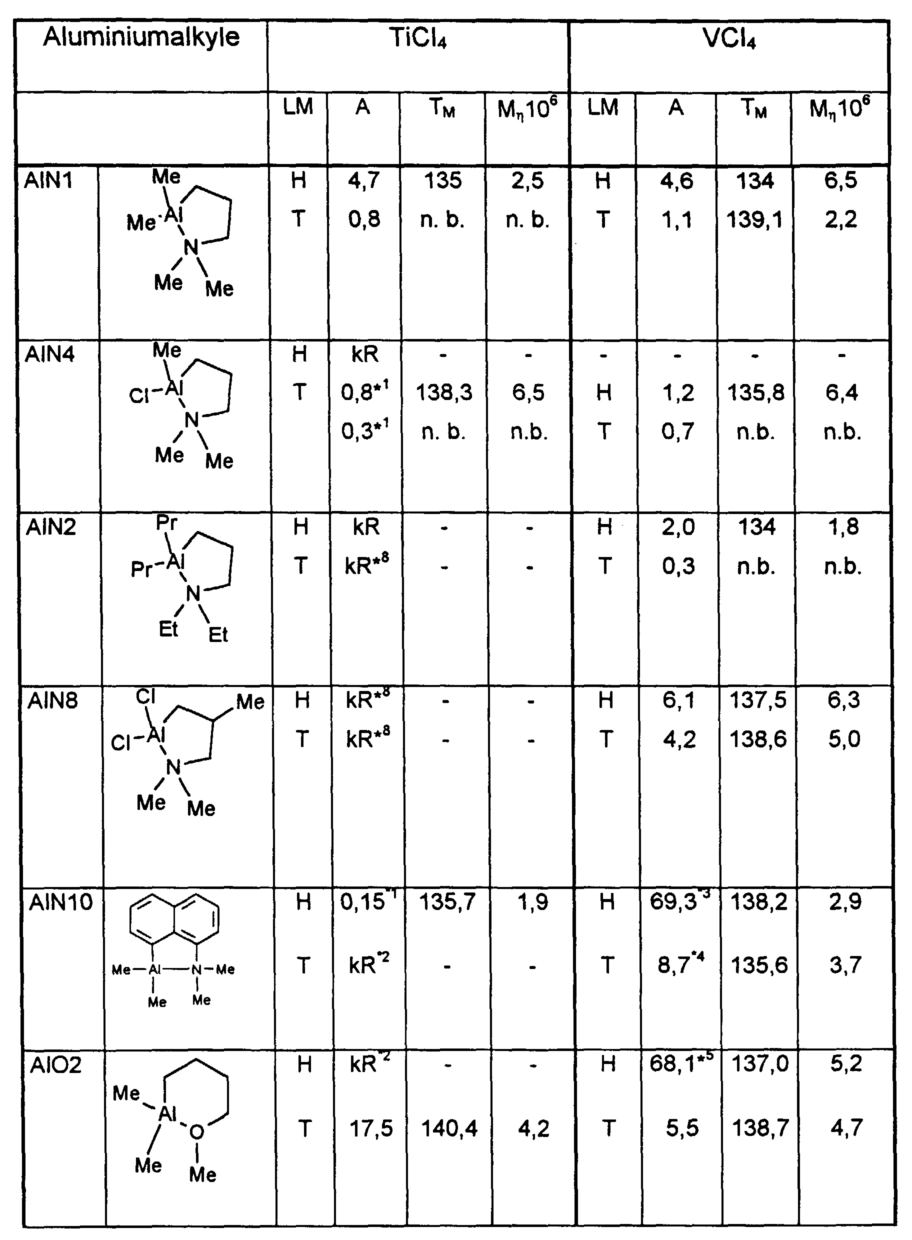

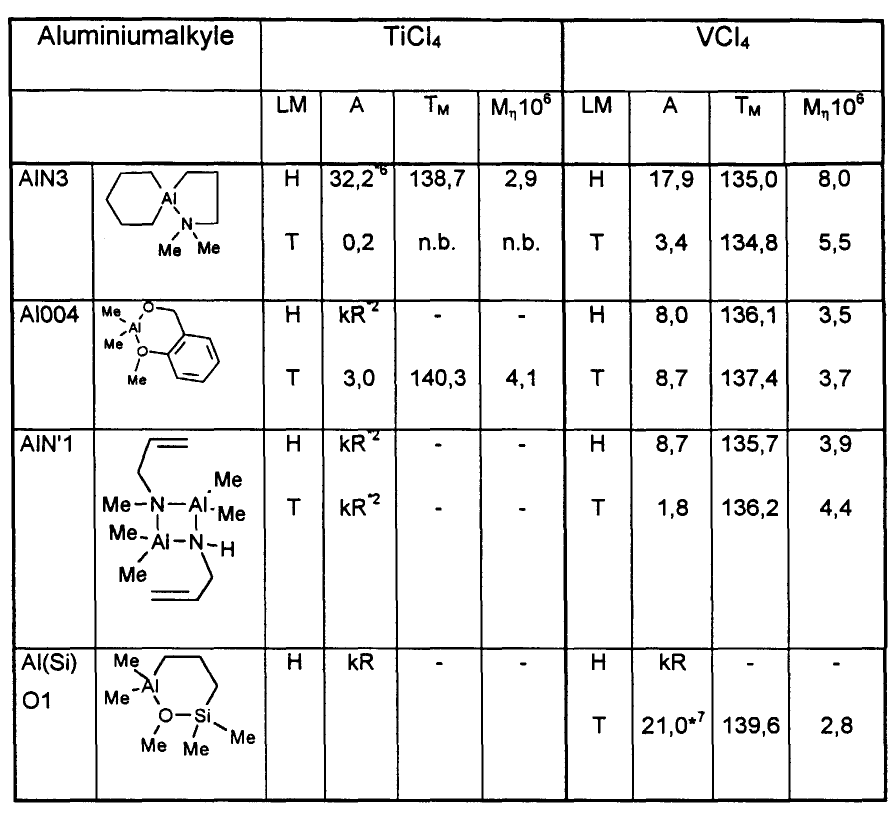

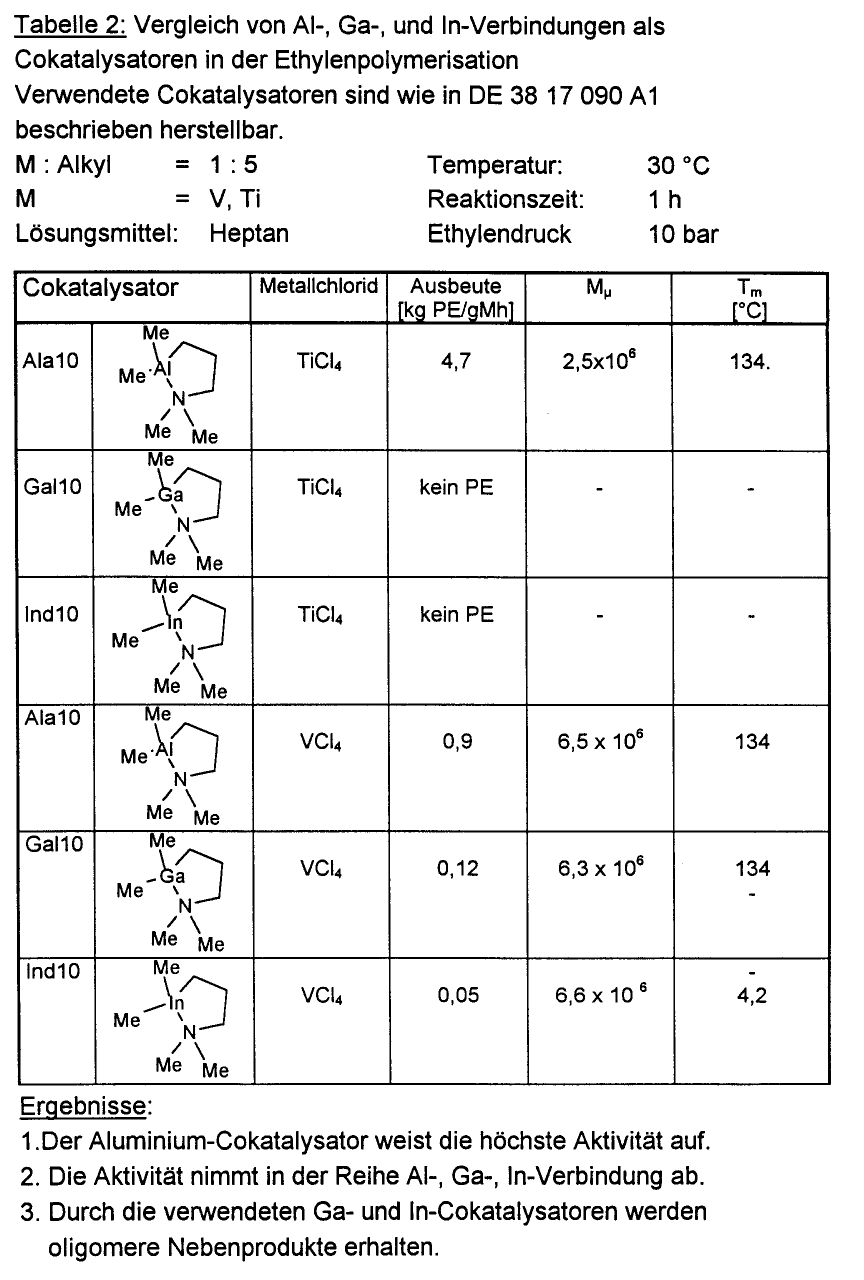

## Patentansprüche

1. Verbindungen der allgemeinen Formel (I) 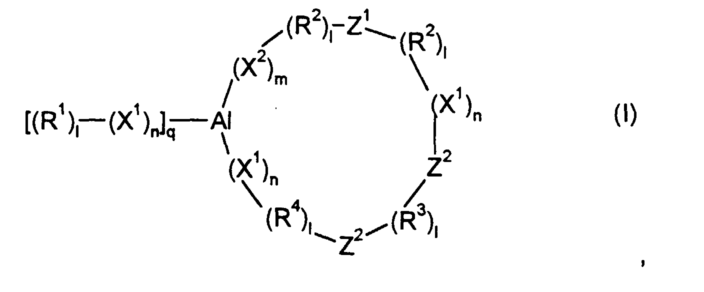 worin
X¹ NH, NH₂*, NH-A*, N-A, N(A)₂*, O, OA*, OAryl*, S, SA*P, P(A)₂*, oder Einfachbindung
X² NH, N-A, O, S, PA oder X¹ komplex gebunden an Al(R¹)₃, oder Einfachbindung
R¹ H; Hal, wenn n = 0; A, gegebenenfalls kovalent gebunden an Al; Si(A)₃, wenn X¹ = O,
R² A, gegebenenfalls kovalent gebunden an Al;
CH₂-CH=CH, CH₂-C≡C für Z¹ = H; 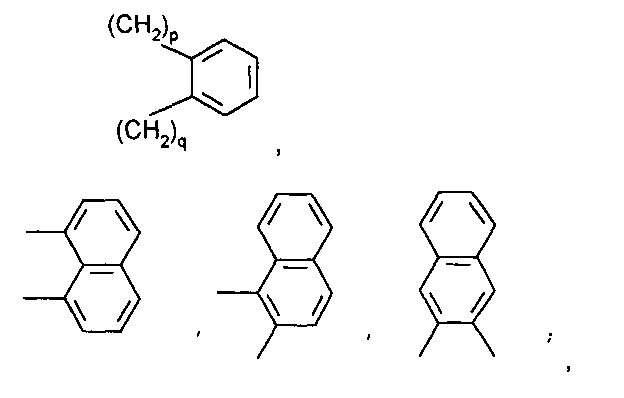
R³ und R⁴ unabhängig voneinander Bindung oder gleich R² oder Si(A)₃ oder Si(A)₂
Z¹ Bindung oder jeweils H gebunden an R²
Z² Bindung oder jeweils H gebunden an R² und R³
mit
A verzweigtes oder unverzweigtes C₁ - C₇-Alkyl, -
Alkyliden oder -Alkenyliden
Aryl Phenyl, Naphtyl
Hal F, Cl,
unabhängig voneinander
n 0, 1,
m 0, 1,
p 0, 1,
q 1, 2
l 0, 1
bedeuten, worin zwischen X¹, X² und Al koordinative Bindungen bestehen können, R¹, R², R³, R⁴, X¹, X², Z¹, und Z² jeweils unabhängig voneinander an unterschiedlichen Positionen im Molekül alle Bedeutungen annehmen können und X¹ nur die mit "*" gekennzeichneten Bedeutungen annehmen kann, wenn l = 0 und R¹, R², R³ oder R⁴ entfallen.

2. Verwendung der Verbindungen der allgemeinen Formel (I) gemäß Anspruch 1 als Komponenten in Koordinations-Katalysatorsystemen.

3. Verwendung der Verbindungen der allgemeinen Formel (I) gemäß Anspruch 1 als Komponenten in Ziegler-Natta-Katalysatoren.

4. Koordinations-Katalysatorsysteme enthaltend Verbindungen der allgemeinen Formel (I) gemäß Anspruch 1.

5. Koordinations-Katalysatorsysteme enthaltend Verbindungen der allgemeinen Formel (I) gemäß Anspruch 1 in Kombination mit Übergangsmetallverbindungen der IV. bis VIII. Nebengruppe des Periodensystems der Elemente.

6. Koordinations-Katalysatorsysteme enthaltend Verbindungen der allgemeinen Formel (I) gemäß Anspruch 1 in Kombination mit Übergangangsmetallverbindungen aus der Gruppe TiCl₄, VCl₄ enthalten.

7. Verfahren zur Herstellung von Polymeren durch Polymerisation,dadurch gekennzeichnet, daß ein Koordinations-Katalysatorsystem nach einem der Ansprüchen 4 bis 6 verwendet wird.

8. Verfahren zur Herstellung von Polyethylen, dadurch gekennzeichnet, daß ein Koordinations-Katalysatorsystem nach einem der Ansprüchen 4 bis 6 verwendet wird.

9. Verfahren zur Herstellung von hochmolekularem Polyethylen, dadurch gekennzeichnet, daß ein Koordinations-Katalysatorsystem nach einem der Ansprüchen 4 bis 6 verwendet wird.
